# EUROPEAN PATENT APPLICATION

(11) **EP 4 844 656 A1**
(43) Date of publication of application: **25.11.2026**
(21) Application number: 24918661.0
(22) Date of filing: 12.11.2024
(51) Int. Cl.: G06Q 10/1053

(54) **TALENT MARKETPLACE SYSTEM USING GENERATIVE AI AND TALENT MARKETPLACE PROGRAM USING GENERATIVE AI**

(30) Priority: 19.01.2024 JP 2024006872
(71) Applicant: Nomura Research Institute, Ltd., Chiyoda-ku Tokyo 100-0004 (JP)
(72) Inventor: KAWABE, Shunsuke, Tokyo 100-0004 (JP); SUZUKI, Yuta, Tokyo 100-0004 (JP)
(74) Representative: Hoffmann Eitle
(86) International application number: PCT/JP2024/040215
(87) International publication number: WO 2025/154374

(57) **Abstract**

Decision-making by a recruiter is supported through more comprehensive and multifaceted evaluation and recommendation of personnel based on diverse input data. A TMP system 1 for supporting matching between a recruiter and an applicant includes an unstructured information formatting unit 20 that outputs, by generative AI 2, career/achievement data 22 of respective personnel from unstructured personnel data 21, an evaluation item setting unit 30 that extracts, by generative AI 2 based on job posting data 31, evaluation items of the respective personnel and outputs the evaluation items as a skill definition 32, and a recommendation processing unit 40 that selects recommendation items by generative AI 2 from evaluation items of the skill definition 32, evaluates the respective personnel by generative AI 2 based on the career/achievement data 22 according to evaluation criteria set respectively for the selected recommendation items, generates, by generative AI 2, reasons for recommendation for personnel to be recommended, and outputs the reasons together with results of the evaluation.

## Description

### Technical Field

The present invention relates to technology that contributes to human capital management in companies, and particularly relates to technology effectively applicable to a talent marketplace system and a talent marketplace program that realize a talent marketplace.

### Background Art

In companies in Japan where the productive population is decreasing, maximum-efficiency utilization of human capital is indispensable. In other words, causing a talent strategy, by which a human resources department procures and develops human resources necessary for execution of a business strategy, and a business strategy, by which each business division develops a business strategy that leverages strengths of human resources, to operate in conjunction while a management layer overlooks the entire company (management strategy) is important for drawing out the value of "human assets" to the fullest extent and leading to medium- to long-term improvement in corporate value.

However, in the current age of VUCA (Volatility, Uncertainty, Complexity, Ambiguity), in which future prediction is difficult, business strategies change and fluidity and diversity of personnel also increase, and a centralized decision-making structure led by a management layer or a human resources department as in the past makes responding to both changes extremely difficult.

Accordingly, formation of a mechanism of an "internal talent market" (talent marketplace) that matches and links, according to market principles, work necessary for execution of a business strategy with abilities, achievements, and intentions of each individual personnel has been considered, and talent strategy and business strategy are linked with agility by this mechanism to improve workplace engagement and productivity.

As a technology related to determination of an assignment destination through matching between a recruiter (job-offering party) and an applicant (job-seeking party), for example, JP 2004-62270 A (Patent Literature 1) describes comparing, for each of a plurality of categories common to the job-offering party and the job-seeking party, recruiter-side response information selected by the job-offering party from a plurality of set choices with applicant-side response information selected by the job-seeking party, calculating evaluation points of the job-seeking party as viewed by the job-offering party and evaluation points of the job-offering party as viewed by the job-seeking party, and performing matching between the job-offering party and the job-seeking party based on the evaluation points.

### Citation List

### Patent Literature

Patent Literature 1: JP 2004-62270 A

### Summary of Invention

### Technical Problem

According to a conventional technology described in Patent Literature 1, although matching between an applicant and a recruiter can be performed to create an assignment proposal, the conventional technology is a simple matching method that serves as an aid when a human resources department creates a tentative assignment plan, and the conventional technology has limitations in seeking appropriateness and effects of matching results.

To enable more appropriate and effective matching in a talent marketplace, support for decision-making by a recruiter is required through more comprehensive and multifaceted evaluation and recommendation of personnel. To realize this objective, a mechanism is required that diversifies data serving as input to the talent marketplace and performs standardized evaluation and recommendation after evaluation items are set from multiple perspectives.

Accordingly, an object of the present invention is to provide a talent marketplace system and a talent marketplace program that support decision-making by a recruiter through more comprehensive and multifaceted evaluation and recommendation of personnel based on diverse input data.

The above and other objects and novel features of the present invention will become apparent from the description of the present specification and the accompanying drawings.

### Solution to Problem

Among inventions disclosed in the present application, an outline of a representative invention will be briefly described as follows.

A talent marketplace system according to a representative embodiment of the present invention is a talent marketplace system for supporting matching between a recruiter and an applicant, the talent marketplace system including: an unstructured information formatting unit that extracts, from unstructured information related to each personnel of the applicant, by generative AI, information on career histories and achievements of each personnel and outputs the information as career/achievement data; an evaluation item setting unit that, based on job posting information, extracts, by the generative AI, information on skills serving as evaluation items of each personnel and outputs the information as a skill definition; and a recommendation processing unit that selects, from the evaluation items of the skill definition, by the generative AI, recommendation items to be intensively evaluated in a project related to the recruiter, evaluates, by the generative AI based on the career/achievement data according to evaluation criteria set respectively, generates, by the generative AI, reasons for recommendation for the personnel to be recommended, and outputs the reasons together with results of evaluation.

The present invention can also be applied to a program that causes a computer to operate as the talent marketplace system described above.

### Advantageous Effects of Invention

Among inventions disclosed in the present application, effects obtained by a representative invention will be briefly described as follows.

That is, according to a representative embodiment of the present invention, support for decision-making by a recruiter becomes possible through more comprehensive and multifaceted evaluation and recommendation of personnel based on diverse input data.

### Brief Description of Drawings

[Fig. 1] Fig. 1 is a diagram schematically illustrating a configuration example of a talent marketplace system according to an embodiment of the present invention.
[Fig. 2] Fig. 2 is a diagram schematically illustrating an example of evaluation and recommendation of personnel in a talent marketplace system according to an embodiment of the present invention.
[Fig. 3] Fig. 3 is a flowchart schematically illustrating an example of a flow of processing related to recommendation of personnel according to an embodiment of the present invention.

### Description of Embodiments

Hereinafter, embodiments of the present invention will be described in detail on the basis of the drawings. In all drawings for describing the embodiments, the same reference signs are in principle assigned to the same parts, and repeated description of the parts will be omitted. On the other hand, a part described with a reference sign in a certain drawing may be referred to with the same reference sign in description of another drawing although the part is not illustrated again.

### <Overview>

A talent marketplace (hereinafter also referred to as "TMP") system according to an embodiment of the present invention is, for example, an information processing system that matches a plurality of internal job postings or the like within a company (departments, divisions, groups, or the like that are recruiters for the job postings are hereinafter also collectively referred to as "recruiters") with applicants for the job postings.

In the present embodiment, during matching, as input data, in addition to structured information such as positions, qualifications, and possessed skills of applicants, various types of unstructured information existing within the company that have not been utilized conventionally (text, images, audio, and other information. In the present embodiment, description is provided using text information), thereby enabling utilization of diverse input data. The unstructured information includes, for example, various types of text information such as career histories of applicants, self-promotion statements of applicants, matching-related or personnel-related information such as recruitment guidelines prepared by recruiters, and proposal documents, business proposals, reports, and chats created by applicants in the course of work.

To handle input of such unstructured information (text information), the present embodiment utilizes generative Artificial Intelligence (AI), such as GhatGPT (registered trademark), the use of which has been increasing in recent years, to evaluate and pick up promising personnel matching recruitment requirements on the basis of unstructured information according to multifaceted items. Then, together with quantitative evaluation, qualitative evaluation such as reasons for recommendation is output as text, and decision-making by a recruiter is supported through more comprehensive and multifaceted evaluation and recommendation of personnel.

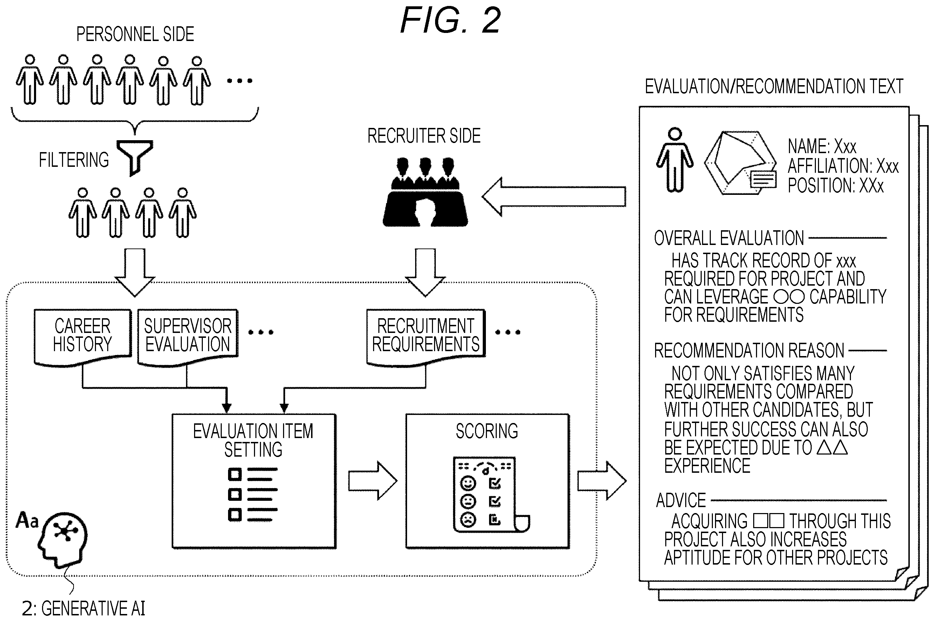

Fig. 2 is a diagram schematically illustrating an example of evaluation and recommendation of personnel in a talent marketplace (TMP) system according to an embodiment of the present invention. Here, with respect to recruiter-side recruitment requirements related to a specific project, first, on the applicant personnel side on the left side in the figure, a candidate list of personnel is mechanically filtered, for example, according to structured information such as positions, qualifications, and possessed skills, and narrowed down to certain candidates.

Then, using as input diverse structured and unstructured information such as career histories and supervisor evaluations related to the personnel, and proposal documents and reports created in the course of work, together with structured and unstructured information such as recruiter-side recruitment requirements and job posting data, evaluation items for multifaceted evaluation of personnel are set. Setting of the evaluation items may be performed manually by a user such as a recruiter-side person in charge or a human resources person, but in the present embodiment, generative AI 2 automatically sets the evaluation items by using unstructured information. Practicality and effectiveness may also be further improved by making manual revisions to evaluation items proposed by the generative AI 2.

Thereafter, for each set evaluation item, the generative AI 2 performs evaluation, for example, on a five-level scale on the basis of content described in the structured and unstructured information, picks up promising personnel as candidates on the basis of the evaluation, and causes reasons and grounds for the evaluation to be output as text for each of the personnel in addition to the evaluation. For example, promising personnel are recommended to the recruiter side in a form such as "Evaluation/Recommendation Text" on the right side in the figure.

### <System Configuration>

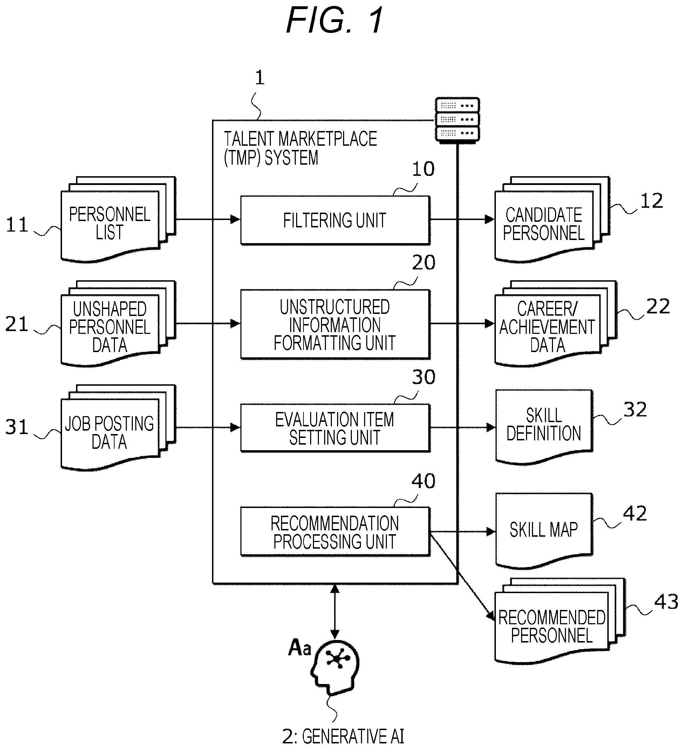

Fig. 1 is a diagram schematically illustrating a configuration example of a talent marketplace (TMP) system according to an embodiment of the present invention. A TMP system 1 may be implemented, for example, by an information processing terminal such as a personal computer (PC) or a tablet terminal, or may be implemented by a server device or a virtual server or the like built on a cloud computing service.

Although the figure illustrates one logical information processing system, functions may be distributed and implemented physically across a plurality of information processing terminals, servers, or the like.

The TMP system 1 realizes various functions related to TMP construction, for example, by causing a central processing unit (CPU) not illustrated to execute middleware such as an operating system (OS), a database management system (DBMS), and a Web server program, which have been loaded into a memory from a recording device such as a hard disk drive (HDD) or a solid state drive (SSD), and software running thereon.

This TMP system 1 includes, for example, units such as a filtering unit 10, an unstructured information formatting unit 20, an evaluation item setting unit 30, and a recommendation processing unit 40, each implemented as software. The units may be implemented as a single application program as a whole, or the units may be configured so that the units are respectively implemented as independent programs and cooperate with one another.

The filtering unit 10 has a function of receiving, as input, information of an applicant personnel list 11 obtained from personnel information and application information with respect to recruitment requirements related to a target project, filtering and narrowing the information in advance on the basis of structured information such as positions and qualifications, and outputting a list of candidate personnel 12.

The unstructured information formatting unit 20 has a function of receiving, as input, unstructured personnel data 21, which is various kinds of unstructured information (text) such as proposal documents, reports, and other materials related to candidate personnel 12, automatically extracting career histories, achievements, and the like by using the generative AI 2, formatting the extracted information into a predetermined format, and outputting the formatted information as career/achievement data 22. Automatically describing the content of the career/achievement data 22 by the generative AI 2 can reduce labor of applicants, and utilization can also be facilitated by structuring unstructured information to a certain degree.

Moreover, by defining a skill definition 32, which will be described later, in advance and automatically extracting career histories, achievements, and the like in accordance with the skill definition 32, extraction can be performed in a form aligned with information sought by the recruiter. This arrangement can support addressing the issue of "not knowing what should be written" when an applicant appeals career histories and achievements upon application, and the issue of "what was not written cannot be judged" when a recruiter evaluates career histories and achievements of an applicant.

The evaluation item setting unit 30 has a function of dynamically creating and outputting a skill definition 32 that is listed so as to cover skills (evaluation items) required in each item of job posting data 31, by using job posting data 31 from a plurality of recruiters as input. Skills required in a large number of items of job posting data 31 can be called skills with high demand. The skill definition 32 may, for example, be automatically created by the generative AI 2 using the job posting data 31 as input and in consideration of purposes and contents of recruitment, and content of the skill definition 32 may be adjusted and customized manually by a human resources department or the like. Characteristics and positioning such as "skills that can be acquired quickly" and "skills that take time to acquire" may be set, and weighting such as degrees of importance may also be set. When the skill definition 32 is created, an existing skill definition may be used as an initial value so that existing initiatives, management policies, and the like are reflected.

The recommendation processing unit 40 has a function of receiving, as input, the skill definition 32 and career/achievement data 22 related to each candidate personnel 12, selecting by the generative AI 2, from skills (evaluation items) in the skill definition 32, evaluation axes formed of skills to be intensively analyzed with respect to recruitment requirements related to a target project, evaluating each candidate personnel 12 by the generative AI 2 on the basis of the selected evaluation axes, and outputting promising personnel as recommended personnel 43 on the basis of results of the evaluation. When the recommended personnel 43 are output, for example, the generative AI 2 may generate strengths/weaknesses of a target person and support that may preferably be provided from an affiliated department to the target person, and may output the generated content as text such as "Evaluation/Recommendation Text" shown in Fig. 2 to place the content in a form understandable to the recruiter, thereby promoting a soft landing of matching.

When the evaluation axes are selected, for example, the evaluation axes objectively selected by the generative AI 2 may be subjectively adjusted and revised by the recruiter according to requirements of a business or a project. For each selected evaluation axis, an evaluation criterion for evaluation (that is, according to what criterion personnel data are read) may be set by the recruiter according to circumstances of a business, a project, and the like. For example, as a five-level evaluation, criteria such as "5: deep knowledge and experience capable of becoming a leader, 4: immediately productive, 3: has experience and can put the experience into practice after training, 2: has knowledge, 1: no particular aptitude" can be set.

When each candidate personnel 12 is evaluated, the generative AI 2 objectively performs the evaluation by carefully reading a large amount of structured and unstructured information related to each individual person according to the evaluation axes and the evaluation criteria. From results of the evaluation for each candidate personnel 12, a skill map 42 indicating how many personnel have each level for each skill (evaluation item) in the skill definition 32 can be obtained, and thereby an inventory of personnel based on skills can be carried out.

When recommended personnel 43 are output on the basis of results of evaluation of each candidate personnel 12, adding, in addition to quantitative numerical values, text of a reason for recommendation (that is, a summary of career histories of candidate personnel 12 based on the evaluation axes) can support qualitative understanding by the recruiter when the recruiter evaluates and judges the recommended personnel 43 and can support explanation to surrounding personnel (without having to go and obtain raw data).

### <Processing Flow>

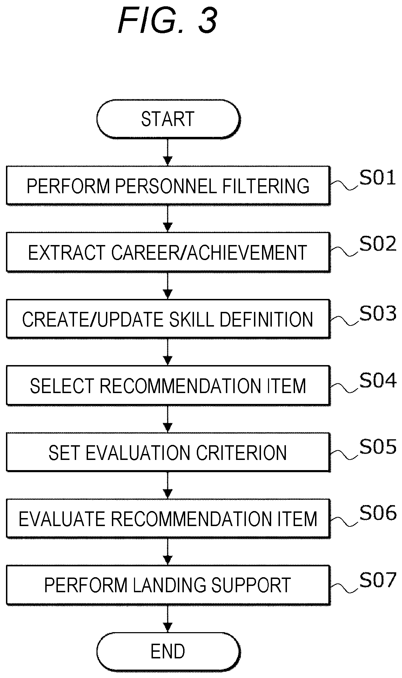

Fig. 3 is a flowchart schematically illustrating an example of a flow of processing related to recommendation of personnel according to an embodiment of the present invention. First, the filtering unit 10 receives, as input, information of the applicant personnel list 11 with respect to recruitment requirements related to a target project, filters and narrows the information on the basis of structured information such as positions and qualifications, and outputs candidate personnel 12 (step S01). Thereafter, the unstructured information formatting unit 20 receives, as input, various kinds of unstructured personnel data 21 such as proposal documents, reports, and other materials related to candidate personnel 12, automatically extracts career histories, achievements, and the like by using the generative AI 2, formats the extracted information into a predetermined format, and outputs the formatted information as career/achievement data 22 (S02).

Thereafter, the evaluation item setting unit 30 receives, as input, job posting data 31 from a plurality of recruiters, dynamically creates or updates, by the generative AI 2 and manual work, a skill definition 32 listed so as to cover skills (evaluation items) required in each item of job posting data 31, and outputs the skill definition 32 (S03).

Thereafter, the recommendation processing unit 40 receives, as input, the skill definition 32, career/achievement data 22 related to each candidate personnel 12, and the like, and selects, by the generative AI 2 and manual work, evaluation axes (recommendation items) to be intensively analyzed with respect to recruitment requirements related to a target project from evaluation items in the skill definition 32 (S04). Then, for each selected evaluation axis, an evaluation criterion for scoring is set (S05), and each candidate personnel 12 is scored and evaluated by the generative AI 2 on the basis of each evaluation axis (recommendation item) (S06). Furthermore, for promising personnel, landing support (comprehensive review) that generates reasons for recommendation, strengths/weaknesses of target personnel, support that may preferably be provided from an affiliated department to target personnel, and the like is performed (S07), and the generated information is output as recommended personnel 43 in a form such as "Evaluation/Recommendation Text" shown in the example of Fig. 2, and the processing ends.

As described above, according to the TMP system 1 according to an embodiment of the present invention, by utilizing the generative AI 2, promising personnel matching recruitment requirements can be evaluated and picked up according to multifaceted items on the basis of diverse unstructured information (text information). In addition, decision-making by a recruiter can be supported through more comprehensive and multifaceted evaluation and recommendation of personnel, such as outputting, together with quantitative evaluation such as scoring, qualitative evaluation such as reasons for recommendation as text.

Although the invention made by the present inventor has been specifically described above on the basis of the embodiment, it goes without saying that the present invention is not limited to the above embodiment and can be variously modified without departing from the gist of the present invention. Moreover, the above embodiment has been described in detail in order to explain the present invention in an easily understandable manner, and the present invention is not necessarily limited to a configuration including all configurations described above.

In addition, it is possible to add, delete, or replace another configuration with respect to a part of the configuration of the above embodiment.

Some or all of the above configurations, functions, processing units, processing means, and the like may be implemented by hardware, for example, by being designed as integrated circuits. The above configurations, functions, and the like may also be implemented by software by a processor interpreting and executing programs that realize the respective functions. Information such as programs, tables, and files for realizing the respective functions can be stored in a recording device such as a memory, a hard disk, or an SSD, or in a recording medium such as an integrated circuit (IC) card, a secure digital (SD) card, or a digital versatile disc (DVD).

In the above drawings, control lines and information lines illustrate lines considered necessary for explanation and do not necessarily illustrate all control lines and information lines in implementation. In practice, almost all configurations may be regarded as being mutually connected.

### Industrial Applicability

The present invention is applicable to a talent marketplace system and a talent marketplace program that realize a talent marketplace.

### Reference Signs List

- 1: Talent marketplace (TMP) system
- 2: Generative AI
- 10: Filtering unit
- 11: Personnel list
- 12: Candidate personnel
- 20: Unstructured information formatting unit
- 21: Unstructured personnel data
- 22: Career/achievement data
- 30: Evaluation item setting unit
- 31: Job posting data
- 32: Skill definition
- 40: Recommendation processing unit
- 42: Skill map
- 43: Recommended personnel

## Claims

1. A talent marketplace system for supporting matching between a recruiter and an applicant, the talent marketplace system comprising:
an unstructured information formatting unit that extracts, from unstructured information related to each personnel of the applicant, by generative AI, information on career histories and achievements of each personnel and outputs the information as career/achievement data;
an evaluation item setting unit that extracts, based on job posting information, by the generative AI, information on skills serving as evaluation items of each personnel and outputs the information as a skill definition; and
a recommendation processing unit that selects, from the evaluation items of the skill definition, by the generative AI, recommendation items to be intensively evaluated in a project related to the recruiter, evaluates, for the selected recommendation items, each personnel by the generative AI based on the career/achievement data according to evaluation criteria set respectively, generates, by the generative AI, reasons for recommendation for the personnel to be recommended, and outputs the reasons together with results of evaluation.

2. The talent marketplace system according to claim 1, wherein
the evaluation item setting unit accepts input of revisions to the skill definition extracted by the generative AI.

3. The talent marketplace system according to claim 1, wherein
the recommendation processing unit accepts input of revisions to the recommendation items selected by the generative AI.

4. The talent marketplace system according to claim 1, wherein
the recommendation processing unit generates, by the generative AI, for the personnel to be recommended, information including strengths/weaknesses of the personnel and advice for the recruiter, and outputs the information together with results of the evaluation.

5. The talent marketplace system according to claim 1, further comprising:
a filtering unit that performs filtering for each personnel of the applicant in advance based on structured information of each personnel.

6. A talent marketplace program for causing a computer to operate as a talent marketplace system for supporting matching between a recruiter and an applicant, wherein
the computer executes:
a step of extracting, from unstructured information related to each personnel of the applicant, by generative AI, information on career histories and achievements of each personnel and outputting the information as career/achievement data;
a step of extracting, based on job posting information, by the generative AI, information on skills serving as evaluation items of each personnel and outputting the information as a skill definition;
a step of selecting, from the evaluation items of the skill definition, by the generative AI, recommendation items to be intensively evaluated in a project related to the recruiter;
a step of evaluating, for the selected recommendation items, each personnel by the generative AI based on the career/achievement data according to evaluation criteria set respectively; and
a step of generating, by the generative AI, reasons for recommendation for the personnel to be recommended and outputting the reasons together with results of evaluation.
